# EUROPEAN PATENT APPLICATION

(11) **EP 3 779 050 A1**
(43) Date of publication of application: **17.02.2021**
(21) Application number: 19776076.2
(22) Date of filing: 27.03.2019
(51) Int. Cl.: E02D 27/52, E02B 17/00, F03D 13/20, E04G 21/10

(54) **METHOD FOR BUILDING CONCRETE FOUNDATIONS FOR LATTICE-TYPE OFFSHORE STRUCTURES, AND FOUNDATIONS BUILT USING THIS METHOD**

(30) Priority: 27.03.2018 ES 201830303
(71) Applicant: INGECID INVESTIGACIÓN Y DESAROLLO DE PROYECTOS, S.L., 39478 Boo de Piélagos (ES)
(72) Inventor: RICO ARENAL, Jokin, 39005 Santander (ES); DE PAZ SIERRA, Jesús, 39005 Santander (ES); LLAMA VÉLEZ, Marina, 39005 Santander (ES); SUAREZ GÓMEZ, Silvia, 39005 Santander (ES); SÁNCHEZ HARO, Javier, 39005 Santander (ES)
(74) Representative: García Gómez, José Donato
(86) International application number: PCT/ES2019/070203
(87) International publication number: WO 2019/185963

(57) **Abstract**

The invention relates to a method for building concrete foundations for lattice-type offshore structures and to foundations built using this method, which has the main aim of replacing the piles used to anchor lattice structures to the seabed (7) with blocks of on-site reinforced concrete (1) which grant the necessary stability to the lattice structure (2), doing away with all pile-driving works but without performing any structural modification of said structure. Said elements are positioned using templates (12). The advantages of this novel invention lie in the possibility of installation on any type of terrain, providing a perfect connection between the seabed and the foundations thanks to on-site concreting, as well as its ease of construction, reduction of noise emissions and of auxiliary means.

## Description

### Object of the invention.

The invention relates to a method for building a concrete foundation capable of supporting a lattice-type offshore structure, suitable for fixing thereon a wind turbine, a meteorological tower or a similar structure. The foundation built with this method also constitutes an object of the invention.

Thus, the invention falls within the field of engineering and building, in particular, for offshore wind turbine installations.

### Background of the invention.

The evolution of the foundation structures for offshore wind turbines varies depending on the depth and material of the seabed.

Starting from reduced depths, the most common solution is the use of gravity foundations. These foundations may or may not require skirts that separate the prefabricated gravity foundation from the seabed to subsequently fill that space with a mortar that provides proper seabed bonding with the foundation.

As the depth increases different types of structures are used. One of them are jackets or lattice structures that, nowadays, can be classified into two subcategories:
- Piled Jackets: They are used in cases where the seabed presents materials with little cohesion and easy for driving piles into the seabed to a depth of up to 40 metres. Within this subcategory there are different pile driving procedures.
   ▪ Positioning of the lattice structure and subsequent vertical piling (1 pile or more per leg).
   ▪ Positioning of the lattice structure and inclined piling inside the legs of said structure.
   ▪ Piling carried out by arranging a template ensuring the correct position and subsequently anchoring the lattice structure by means of connecting elements that enter the top hole of the piles.
- Jackets with suction buckets. In the event that the seabed material exhibits good cohesion, this system is used as it avoids having to drive deep piles, which may present difficulties in these types of terrain.

From patent literature document CN 103469808 is to be highlighted, which describes a foundation for a marine wind turbine constituted by a top opened concrete caisson provided with holes in which the legs of the lattice structure are connected. This caisson is manufactured in a dry factory and is then anchored and ballasted by filling it with sand or stones to increase its weight and prevent the wind turbine from overturning, and subsequently the lattice structure and the wind generator are coupled to it. This caisson is only suitable for being placed on seabeds with horizontal and uniform surface, but it is not suitable for fixing on a rocky, irregular or inclined seabed as it would not be seated on the seabed and could accidentally break or move.

### Summary of the invention.

Thus, in general, at present all these lattice-like structures are founded by means of piling or suction buckets depending on the characteristics of the terrain. The solution proposed in this document is contemplated for those places where the piling solution may be very expensive, as in the case probably found on seabed with very dense or rocky materials.

In some cases, piling can represent both technical and economic challenges. The non-mitigation of noise emissions and the difficulty of piling may make it necessary to build concrete foundations on-site such as the one presented in this invention without having to remove or modify the lattice structure. This invention has been designed to use the same lattice structure, solving the problems of prior systems (rocky seabed and excess noise emissions in the pile driving), and making the process of building lattice-type offshore structures easier.

The present invention is a building method, valid for all types of seabed materials, of lattice-like elements for offshore structures supported on the seabed by reinforced concrete blocks laid on-site. These concrete blocks allow housing the supports of the legs of the structure, which end in the same connecting pieces as the joining pieces that are introduced into the upper end of the metal piles and which, in this case, are introduced into a circular hole made in the concrete block. Each of these blocks presents the following structure:
- A guiding cone that is placed by means of a recoverable template on the seabed marking the precise location point of each of the connecting parts of the lattice structure to be supported.
- A lost formwork having an outer wall defining the configuration of the concrete block; an inner wall forming the element in which the connecting part is housed with the lattice structure; and an intermediate structure including several structural reinforcements between both (inner and outer) walls that hold them in a concentric position and that also constitutes the reinforcement of the concrete when embedded therein.
- A concrete filling occupying the space between both walls of the lost formwork, poured once the guiding cone and formwork have been positioned in their location on the seabed.

The method for building a concrete foundation for lattice-type offshore structures comprises, successively, the following steps:
a) A first phase of anchoring a recoverable template defining, at the points where the lattice structure connection structure is to be housed, cylindrical holes that allow to house guiding cones placed in the exact position marked by each of the support points of the lattice structure.
b) Positioning said guiding cones, made of concrete, introduced into the cylindrical holes of the said template defining, as already indicated, the exact position on the seabed in which the concrete blocks are to be concreted so that they constitute the point supports of the lattice structure matching with the supports it has.

Optionally, these first two steps of anchoring the template and positioning the guiding cones within the cylindrical holes of said template could be carried out jointly; it would only be necessary to have means of coupling said cones in each of the cylindrical holes and of decoupling once deposited jointly on the seabed.
c) The next step consists of removing the said template, leaving the guiding cones in the desired position on the seabed.
d) Positioning a lost formwork on the seabed, of the type described above, in each of the positions marked by each of the guiding cones, which are inserted into the inner hole of each formwork.
e) Subsea concreting all the lost formwork, in the space between its outer wall and its inner wall, to form a concrete block of the size and shape defined by the formwork, defining a slightly cylindrical body with an also cylindrical central hole in which the connecting structure of the lattice structure will be housed.
f) Placing each of the legs of the lattice structure introduced into the cylindrical holes made in each of the built concrete blocks; and finally,
g) Sealing the connecting part and the foundation hole by injecting mortar into the space between the two elements.

Optionally or when considered relevant, before placing the lattice structure by inserting the corresponding connecting element with said structure into the holes, the coordinates of the set of all the holes must be laid out and, if necessary, the position of the connecting parts of the legs of the structure must be adjusted on some of them.

The advantages provided by this system and building method are:
- It is good for any seabed terrain.
- The connection between the seabed and the foundation is perfect thanks to on-site concreting. This minimises overturning, rotation and seating.
- Elimination of the drilling process, necessary in some types of piles.
- On-site execution also simplifies building processes and reduces the size of auxiliary means.
- Noise emissions are reduced since there are no drilling or pile-driving works.
- Possible seats are corrected definitively and easily with the adjustment of the connecting element that is inserted into the foundation hole, in the same way that it is resolved in foundation cases using piles.

### Brief description of the drawings.

In order to complement the description that is being carried out and with the purpose of facilitating a better understanding of the characteristics of the invention, the present description is accompanied by a set of drawings as an integral part thereof, wherein, by way of a non-limiting example, the following has been represented:

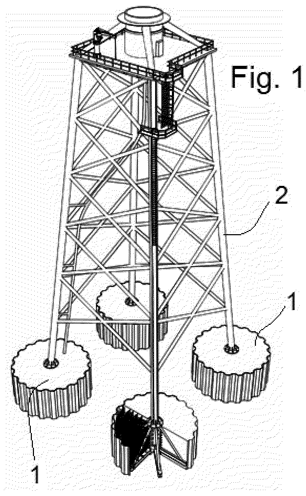

Figure 1 shows a perspective view of a foundation supporting a lattice structure (2).

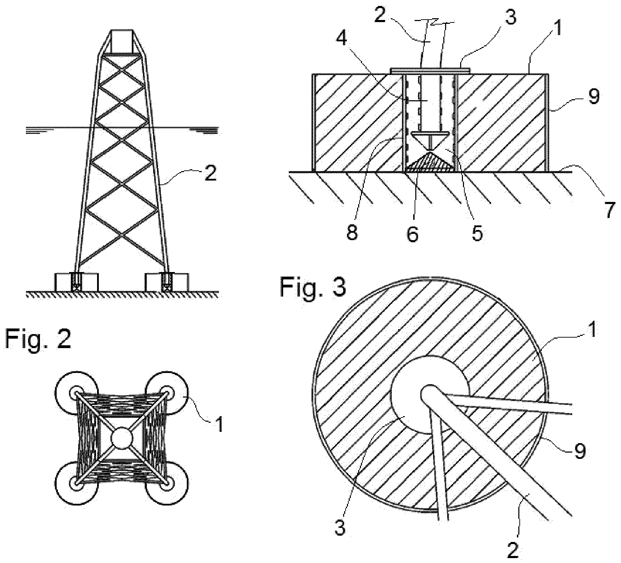

Figure 2 shows a front and plan view of the assembly once assembled.
Figure 3 shows a vertical section and a plan view of one of the elements (1) of the invention.

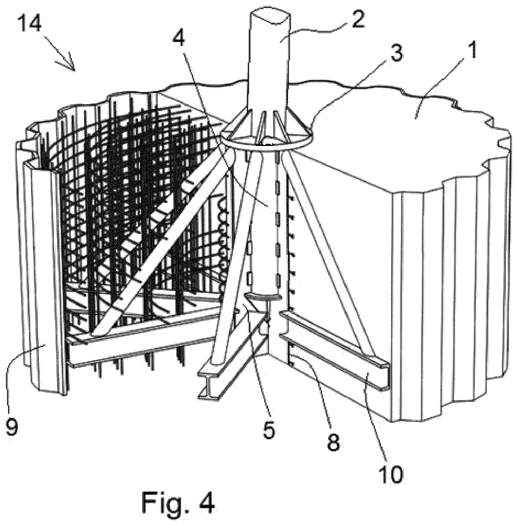

Figure 4 shows a perspective view of one of the concrete blocks (1) that together constitute the foundation object of the invention.
Figure 5 shows a schematic image of the template (12).
Figures 6 and 7 show the process of positioning the template (12).
Figures 8, 9, 10 and 11 show the process of positioning the guiding cones (6).
Figures 12 and 13 show the process of removing the template (12).
Figure 14 shows the final position of the guiding cones (6).
Figures 15 and 16 show the process of positioning the formworks (14).
Figures 17 and 18 show the process of concreting the formworks (14).
Figure 19 shows the process of positioning the structure (2) on the concrete blocks (1) that make up the foundation.

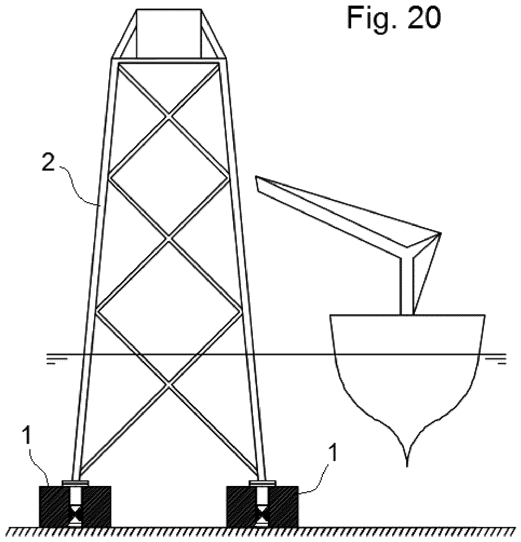

Figure 20 shows the process of sealing the connecting element of the structure (2) with the foundation.

### Preferred embodiment of the invention.

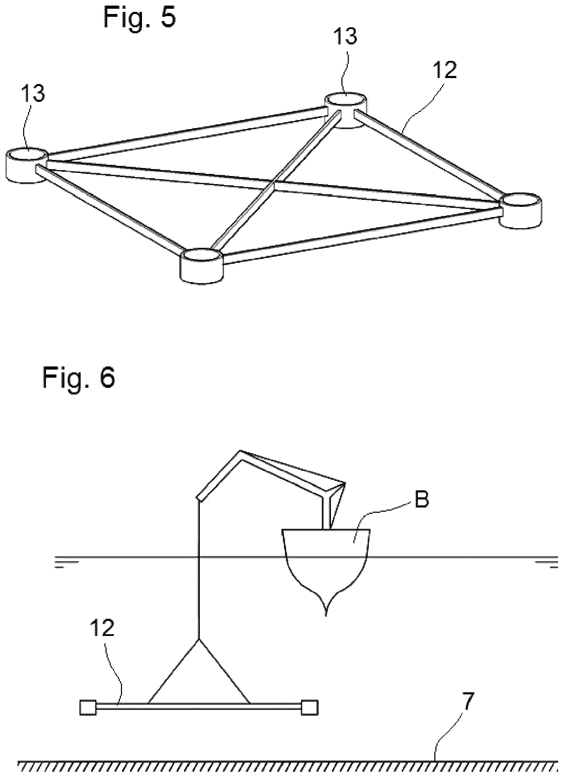

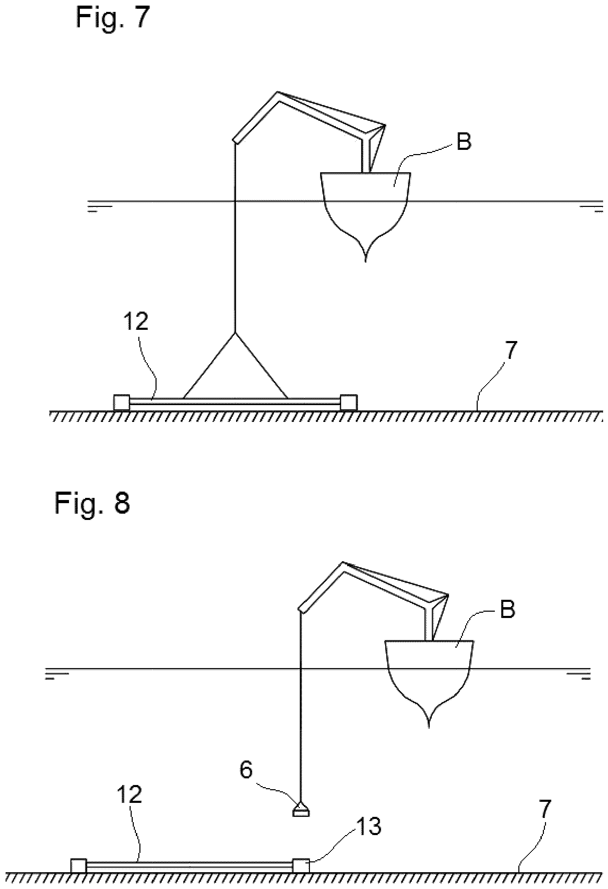

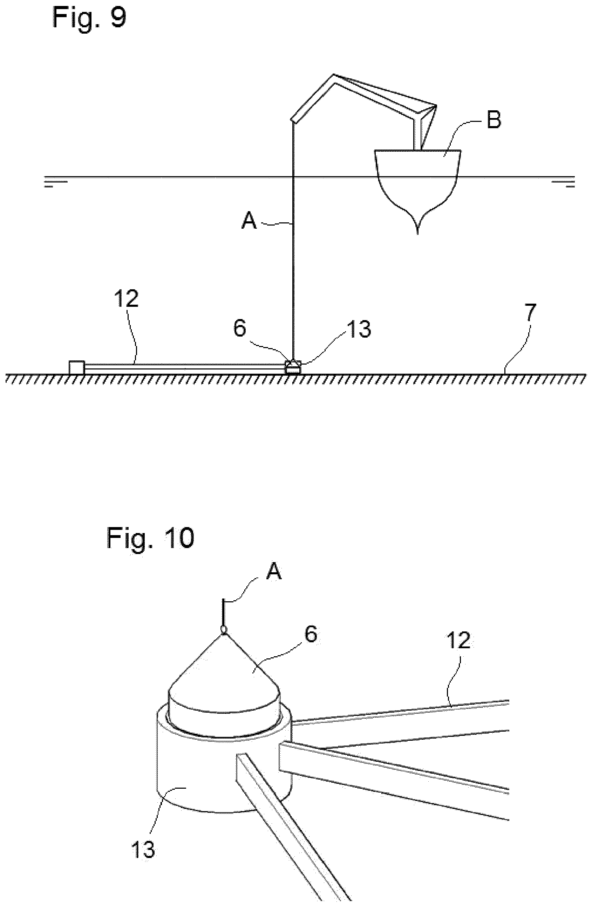

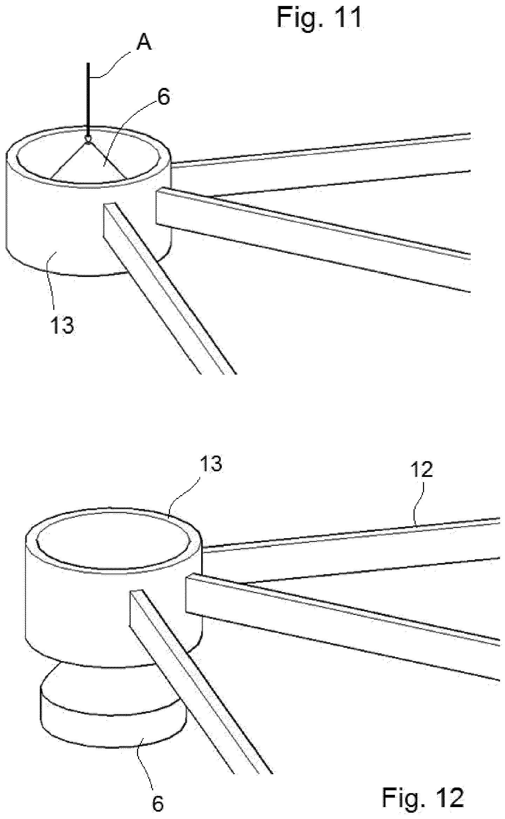

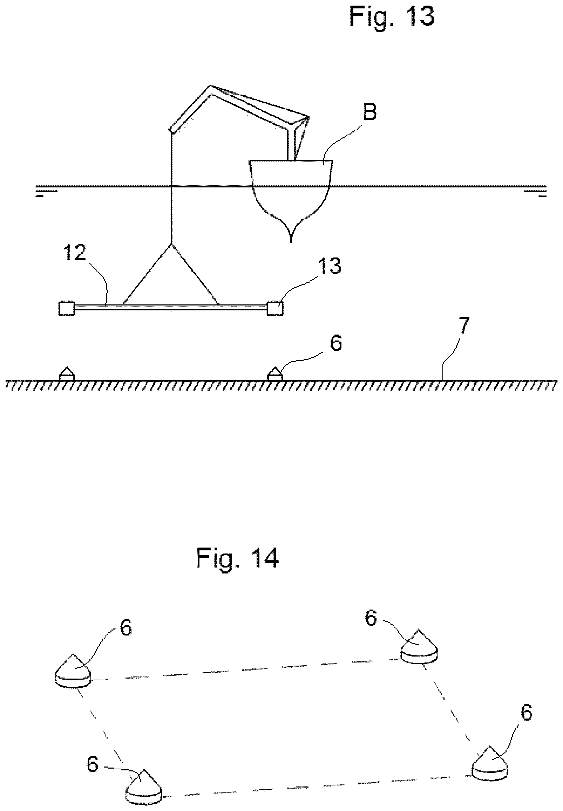

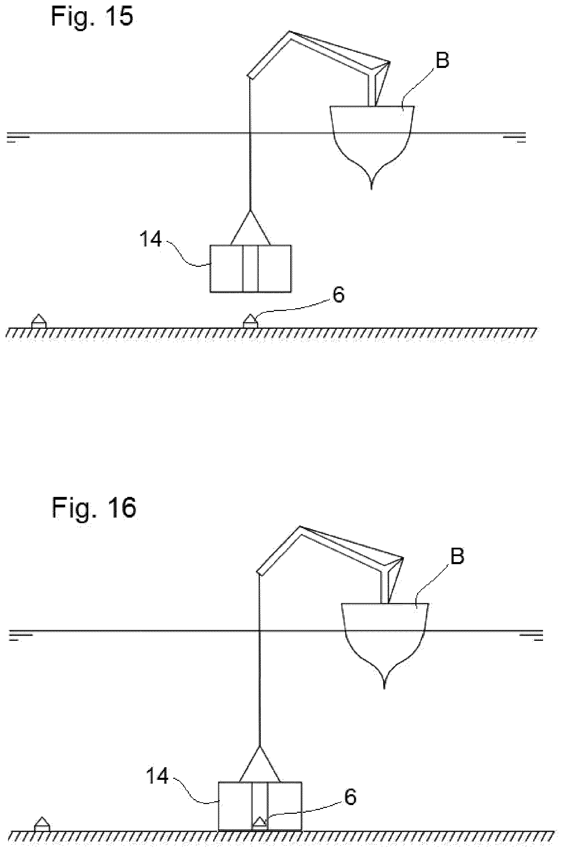

The main object of the invention is the replacement of the piles with reinforced concrete blocks (1) concreted on-site that confer the necessary stability to the latticework structure (2), doing away with all pile-driving works but without having to perform any modifications to the structure (2). The building method is explained step-by-step below:
- A recoverable template (12), which anchors in the required position from a boat (B), is used that presents, at the points where the formwork (14) is to be fixed, cylindrical elements (13) that allow housing the guiding cones (6). See Figures 5, 6 and 7.
- Once the template (12) is anchored, the guiding cones (6) are positioned (Fig. 8, 9, 10 and 11). The guiding cones (6) are concrete elements that are suspended (strapped) from a mooring (A) located at the apex of the cone thanks to which they anchor in a balanced way from the boat (B) until they are introduced into the cylindrical holes (13) of the template (12), thus fixing their exact position on the seabed (7).
- Once all the guiding cones (6) have been anchored and positioned, the template (12) is removed from the boat (B), the cones (6) remaining in the desired position of the seabed (7). See Figures 12, 13 and 14.
- Once the template (12) has been removed, the formwork (14) is positioned from the boat, so that each of the guiding cones (6) are inserted into the inner hole (5) of each of the formwork (14). See Figures 15 and 16.

The formwork is positioned as just indicated with the help of the guiding cones (6), which have been positioned before the formwork (14), on the seabed (7).

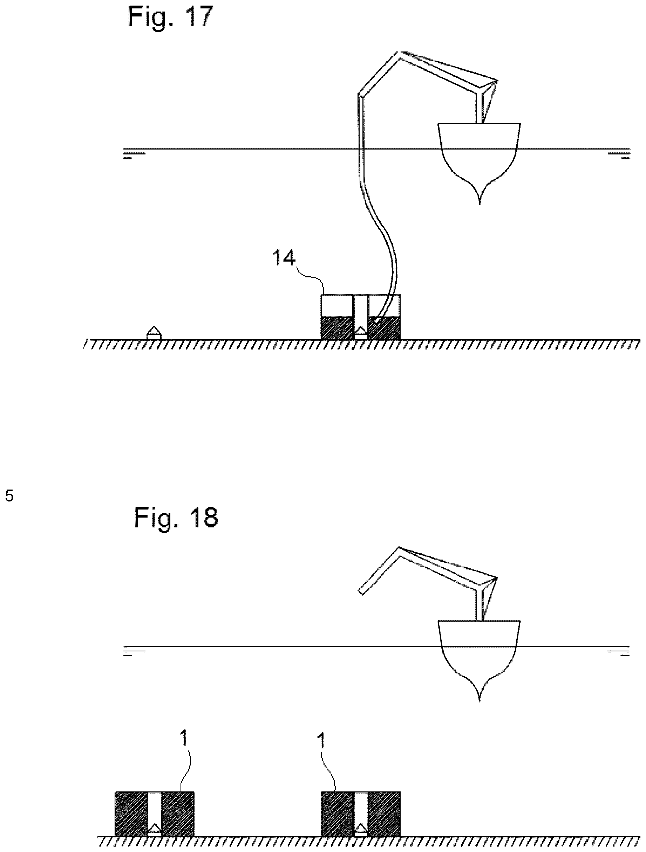

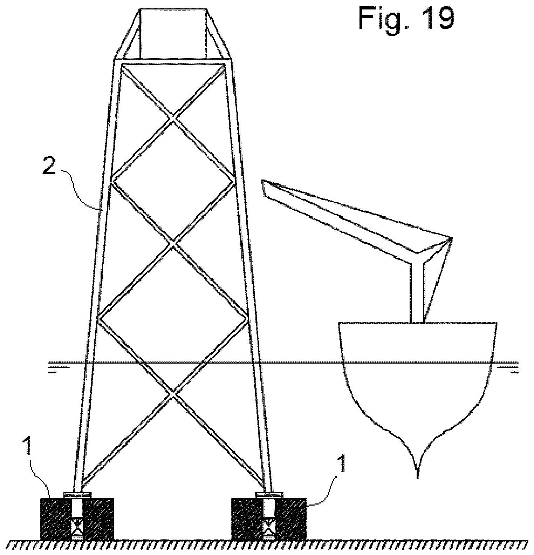

Each of the formwork (14) that allows the construction of a concrete block (1) that constitutes the support of one of the connections (4) of the latticework structure (2) has:
- An outer wall (9) defining the configuration of the concrete block (1).
- An inner wall (8) forming the hole (5) for subsequently housing the connecting part (4) of the lattice structure, which rests on the block (1) by means of a support plate (3) fixed on the connecting element (4) at the appropriate height.
- A structure (10) including several structural reinforcements between both walls (8) and (9) that hold them in a concentric position and that make up the concrete reinforcement when it is embedded in it in the concreting step.
   - Once the formwork has been positioned, it is concreted, using the usual subsea concreting techniques, obtaining a concrete block (1) of the size and shape defined by the formwork (14), with a cylindrical central hole (5) where the connecting part (4) of the lattice structure (2) will be housed. This process is performed for all the concrete blocks (1) where each of the legs of the structure (2) will be supported. (Fig. 17)
   - After checking the layout of the coordinates of the set of all the inner holes (5) for the connecting element (4) with the structure (2), which constitute all the elements of the foundation that will house all the legs of the same, and prior to its placement, any adjustment, if necessary, is made to any of the connecting parts (4) of the legs of said structure (2) and the placement of each of the legs of the lattice structure (2) is carried out by introducing it into the cylindrical inner holes (5) made in each of the concrete blocks (1), the support (3) of the structure (2) being above the concrete block (1) and the structure (2) in an upright position supported on the various blocks (1). See Figure 19.
   - Once the verticality of the entire lattice structure (2) has been checked, the connecting part (4) and the foundation hole (5) are definitively sealed, injecting mortar into the free space that may remain between the inner wall (8), the connection piece (4) and the cone (6).

## Claims

1. A method for building a concrete foundation for lattice-type offshore structures **comprising,** successively, the following steps:
a) anchoring a recoverable template (12) defining, at the points where the connecting structure (4) of the lattice structure (2) is to be housed, cylindrical holes (13) that allow to house guiding cones (6);
b) positioning of concrete guiding cones (6) introduced into the cylindrical holes (13) of the template (12), defining the exact position on the seabed (7) on which blocks (1) constituting the point supports of the lattice structure (2) are to be concreted;
c) removing the template (12), leaving the cones (6) in the desired position of the seabed (7);
d) positioning a formwork (14) on the seabed (7), in a position such that each of the guiding cones (6) is introduced into the inner hole (5) of each formwork (14);
e) subsea concreting all the formwork (14) in the space between an outer wall (9) and an inner wall (8) thereof to form a concrete block (1) of the size and shape defined by the formwork (14), with a central cylindrical hole (5) in which the connecting structure (4) of the lattice structure (2) will be housed;
f) placing the lattice structure (2), introducing each of its connecting parts (4) into the cylindrical holes (5) made in each of the concrete blocks (1); and
g) sealing the connecting part (4) and the foundation hole (5) by injecting mortar into the space between the two elements.

2. The method according to claim 1, **characterised in that**, optionally, the first two steps of anchoring the template (12) and positioning the guiding cones (6) within each of the cylindrical holes (13) of said template (12) are carried out jointly.

3. The method according to any one of the preceding claims, **characterised in that** before placing the lattice structure (2) on the concrete blocks (1), introducing the corresponding connecting element (4) with the structure (2) in the holes (5), a layout of the coordinates of the set of all the holes (5) and, if necessary, the adjustments in any of the connecting parts (4) of the legs of the structure (2) are carried out.

4. Concrete foundation for lattice-type offshore structures **comprising** several independent blocks (1) of reinforced concrete built on-site on the seabed (7) in correspondence with the connections (4) existing at the support points of the lattice structure (2) to be supported, each of which comprising:
- a guiding cone (6) that is placed by means of a recoverable template (12) on the seabed (7) marking the precise location point of each of the connecting parts (4) of the lattice structure (2) to be supported;
- a lost formwork (14) having an outer wall (9) defining the configuration of the concrete block (1); an inner wall (8) forming the opening in which the connecting part (4) of the lattice structure is housed; and a structure (10) including several structural reinforcements between both walls (8) and (9) that hold them in a concentric position and that reinforce the concrete by being embedded therein; and
- a concrete filling taking the space between the walls (8) and (9) of the lost formwork (14), poured in this space once the guiding cone (6) and the formwork (14) have been positioned in their location on the seabed (7).
